# EUROPEAN PATENT SPECIFICATION

(11) **EP 2 543 995 B1**
(45) Date of publication and mention of the grant of the patent: **25.03.2015**
(21) Application number: 11172871.3
(22) Date of filing: 06.07.2011
(51) Int. Cl.: G01N 27/70, G01N 30/64

(54) **Helium ionization detector**
Heliumionisierungsdetektor
Détection d'ionisation de l'hélium

(43) Date of publication of application: 09.01.2013
(73) Proprietor: SRI Instruments Europe GmbH, 53604 Bad Honnef (DE)
(72) Inventor: Schambeck, Karl-Heinz, 53604 Bad Honnef (DE)
(74) Representative: Kalhammer, Georg

(56) References cited:
- EP-A1- 1 279 955
- GB-A- 1 294 853
- US-A- 5 394 091
- US-A- 5 541 519
- BRADLEY C KAANTA ET AL: "A monolithically fabricated gas chromatography separation column with an integrated high sensitivity thermal conductivity detector", JOURNAL OF MICROMECHANICS & MICROENGINEERING, INSTITUTE OF PHYSICS PUBLISHING, BRISTOL, GB, vol. 20, no. 5, 1 May 2010 (2010-05-01), page 55016, XP020175418, ISSN: 0960-1317

## Description

The invention relates to the field of gas chromatography (GC) detectors and particularly to a helium ionization detector (HID). Helium ionization detectors are generally used to characterize and quantify components which are eluted from a gas chromatography column at the end of a separation process. These detectors are highly suitable for a wide variety of applications, including analysis of ambient air, natural gas and oil analysis but they are particularly useful for detecting the components of mixtures of organic compounds.

Gas chromatography is a well-known technique which allows separating sufficiently volatile components from a mixture and their subsequent characterization and quantification. Therefore, it is required that the detector for gas chromatography is sensitive to all the compounds of interest and gives a response that is proportional to the quantity of these compounds. The helium ionization detector (HID) is one of the most sensitive detectors currently available for gas chromatography. Most HIDs known in the state of the art are non-selective and are capable of detecting all chromatographable species with the exception of neon. Importantly, HIDs are capable of detecting and quantifying compounds present in the amounts of as low as a few parts per million. In addition, HIDs are particularly useful for the detection of volatile inorganic compounds such as nitrogen oxides, carbon monoxide, carbon dioxide, oxygen, nitrogen and hydrogen. It is also possible to use HIDs for selectively detecting certain chemical compounds. In order to selectively detect chemical compounds, the HID is operated in a pulsed-spark discharge mode which will be explained later.

The principle of HIDs has been known for a long time in the art, and all HIDs function according to the same principle:
a) A helium gas stream flows through a pair of electrodes which are connected to a high-voltage source to create an electric arc or, alternatively, sparks. This creates plasma from the helium gas.
b) The electrons of the plasma release their excess energy as photons when returning to the stable state.
c) The photons emitted in b) above are capable of ionizing compounds eluting from the gas chromatography column.
d) The resulting ionized compounds are trapped on a collecting electrode and generate a current that can be measured. The intensity of the current is proportional to the amount of the corresponding compound in the analyzed mixture.

Several types of HIDs are described in the prior art. US patent 5,394,091 discloses a discharge system which forms photons which are emitted from a pulsed spark discharge. The spark interacts with a flowing helium stream to thereby provide the necessary photon emission. In this system, the apparatus utilizes a pair of spaced electrodes which provide transverse spark across the gap between the electrodes so that the photon emission occurs. Helium is introduced into the flow path to flow through the spark discharge region. The helium flow is directed away from the spark discharge electrodes through an elongate tubular passage which houses two exposed rings. The rings serve as first and second electrodes for an electrometer output instrument. The sample material from the GC column is introduced through a movable coaxial introduction tube inserted from the opposite end of the detector. The position of this movable tube can be adjusted so that the sensitivity of the detector is thus optimized.

The housing of the measuring chamber supports an internally threaded, counter sunk, sealing shoulder fitting which enables connection with the pressure and flow regulator which permits connection with the helium source. All components are removably fitted into the measuring chamber. This has the advantage that the individual parts of the measuring cell can be replaced, if necessary. However, a screw connection is never absolutely tight, and furthermore, the HID is usually operated at very high temperatures of e.g. more than 400°C. Due to the high temperature differences, there is the inherent risk of small leakages which can occur in the screw connection. The HID disclosed in US 5,394,091 uses seal rings, but those seal rings while usually being efficient at the beginning of the operation, after several measurements and thus several temperature cycles tend to leak. Each small leak in the housing or in the connection of the appliances with the housing can cause ambient atmosphere to enter the HID, which increases the noise and decreases the signal-to-noise ratio and thus the sensitivity of the sensor.

Furthermore, since the appliances (helium flow connector, etc.) are adjustable, in practice, the helium ion detector must be adjusted before each measurement or at least after several measurements (several temperature cycles). This is disadvantageous as it requires additional work for the operator. This detector can only be used if the working conditions allow a readjustment of the flow connectors and the electrodes.

EP 1 279 955 discloses a HID comprising a helium supply section part, an ionization section through which the helium flows in order to create a plasma, and a detector body providing a detection zone wherein the plasma meets components to be quantified, the components being eluted from a gas chromatographic separation device. The parts of the ionization system comprise a spark electrode assembly, the assembly comprising an anode and cathode that are both bonded in an insulating cylinder. The entire cathode/anode cylinder assembly can be replaced, thus avoiding any defect when mounting the new assembly in the detector.

Again, as with the HIDs of US 5,394,091, in this design the parts of the detector are removable, which means that there must be a thread connection or something similar, which has the inherent risk that during operation the signal-to-noise ratio decreases because of leakages that can occur. In such a case the sealing of the HID must be renewed. This is in particular difficult if the HID is used in conditions where it is not easily accessible.

The collecting electrode of the HID of EP 1 279 955 comprises a circular hollow part which is set concentrically around the column tip. A mixture of the helium stream and the sample stream (the exhaust gas) leaves the HID through the collecting electrode which is thus serving as an exhaust. This construction has the advantage that a separate connection for an exhaust pipe (capillary for removing the exhaust gas) is not needed in the HID of EP 1 279 955, however, when the exhaust gas streams around the collecting electrode, there is a risk that a so-called jet stream occurs. A jet stream leads to a backflow from the outside of the electrode. If such a backflow occurs, ambient air molecules from the surrounding atmosphere can enter the HID, which increases the noise and accordingly reduces the sensitivity.

US patent 5,541,519 discloses a photoionization detector in which a selective ionization of compounds in a gas sample is accomplished. This ionization detector uses preferably helium, doped with relatively small concentrations of a selected rare gas, as a carrier gas in the high voltage spark excitation and ionization detector. Helium is excited by the spark discharge creating a relatively slow diffusing flux of metastable helium, which drifts downstream from the spark gap. The decay of metastable helium, in turn, excites the dopant gas by a time delayed reaction. The net result of the spark discharge is used to excite the helium-dopant gas mixture, which results in the emission of photons arising from well known resonance lines. While this design can increase the selectivity to certain compounds, it is disadvantageous, because a second gas source besides helium is needed and because a stable ratio of second gas to helium must be ensured.

The detector of US 5,541,519, as the other detectors of the prior art, is constructed from several individual parts which are usually screwed together. In this document it is realized that such a screw connection has the inherent risk of leakages and the design with two ionization gases is used to avoid the noise from atmospheric gas. However, by doing so the range of detectable compounds is significantly reduced, which is in itself disadvantageous in addition to the disadvantages which follow from the quite complicated design of this detector.

All detectors of the prior art have the disadvantage that they are comparatively big in size, and it is therefore difficult to use those detectors in gas chromatographs, where only limited space is available. In particular, for gas chromatographs which are included in automatic measuring systems such as in robotic devices for investigating hazardous environments or similar applications, the helium ion detectors of the prior art are simply too big. Therefore, in many such applications other detectors are used which are smaller in size, despite the fact that such other detectors usually do not have the same sensitivity as helium ion detectors.

Thus, there is a demand for a reliable and highly sensitive HID which is not affected by a decreased signal-to-noise ratio arising from the presence of traces of the surrounding atmosphere. The detector should have a very high sensitivity from the beginning which does not decrease during the operation time, and the detector should be very small, so that it can be used in gas chromatographs, where a limited amount of space is an issue. The HID should not require any readjustment or maintenance during its normal lifetime.

Such HID is provided by the present invention.

The present invention thus provides a helium ionization detector comprising a chamber 1 with
(a) a pair of ionization electrodes 2,
(b) an inlet for helium gas 3,
(c) an inlet for the components to be detected 4,
(d) a gas outlet 5 and
(e) a collecting electrode 6,
characterized in that the chamber 1 is a monolithic block containing openings for the elements a, b, c, d and e.

The present invention also provides a gas chromatograph containing such a helium ionization detector and a method for analyzing an eluted sample in a carrier gas with a helium ionization detector as defined above.

The most important part of the new detector is the new measuring chamber which consists of a monolithic block, which means that it does not contain any removable parts. This avoids the risk that leakages can occur, because there are no screw connections or other connections between different parts of the measuring chamber which could cause leakages either immediately after assembling the chamber or after several cycles of use of the HID. Furthermore, since the chamber is constructed from a monolithic block, it is possible to permanently fix the appliances (i.e. the electrodes 2 and 6 and the capillaries for gas inlet and outlet 3, 4 and 5) to the chamber, which also avoids the risk of the occurrence of leakages. By providing an extra exhaust line for removing the exhaust gas, the risk of the occurrence of a jet stream is significantly minimized.

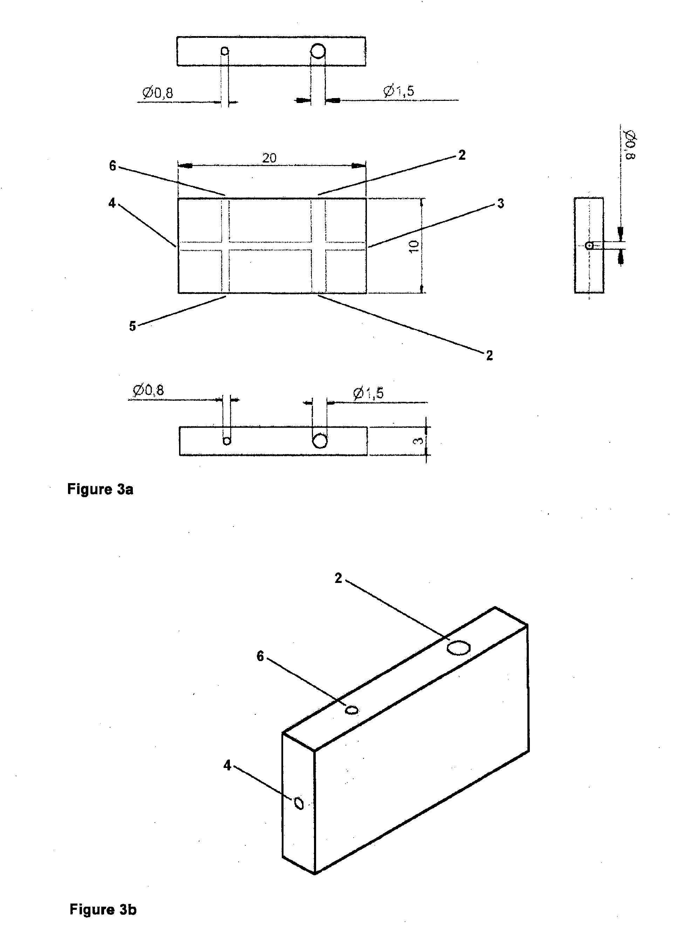

A particular advantage of the HID of the present invention is that it can be built in a highly compact manner. The length of the monolithic block typically ranges between 15 mm and 25 mm and can be for example about 20 mm. A monolithic block forming the chamber of the HID of the present invention usually has a width of 5 to 15 mm, such as about 10 mm and a height of 2 to 7 mm, e.g. about 3 or 5 mm. Figure 3 shows a preferred chamber for a helium ionization of the present invention in its exact dimensions (Figure 3a) and enlarged as a three-dimensional presentation (Figure 3b). Thus, the HID of the present invention can be built significantly more compact than all HIDs known in the prior art.

The HID of the present invention differs from the known HIDs that use the collecting electrode as an exhaust in that it uses a separate gas outlet, through which the mixture of the helium gas and the stream from the gas chromatography column exits the HID chamber. The gas outlet usually is an exhaust capillary. The exhaust capillary is preferably coiled so that the probability that ambient air enters into the HID chamber is additionally minimized.

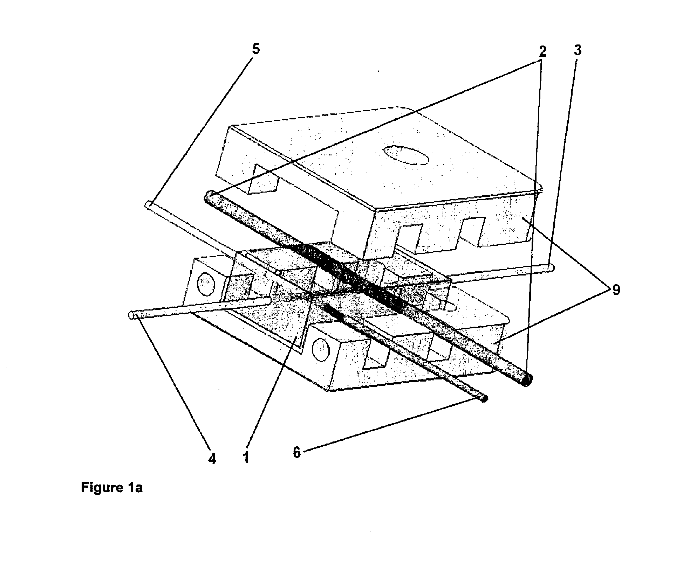

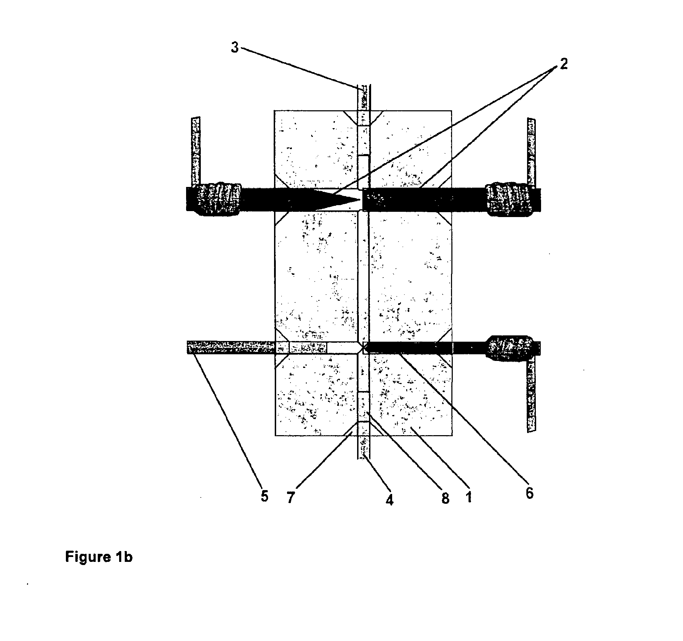

The chamber 1 of the helium ionization detector of the present invention usually contains six openings into which the electrodes (two ionization electrodes 2 and one collector electrode 6) and capillaries for the ionization gas 3 (helium), the detecting gas sample 4 and the exhaust gas 5 can be fitted. In a preferred embodiment, the openings are connected by channels, as it is shown in Figures 1 to 3.

The electrodes and the capillaries for the exhaust gas, the ionization gas and the gas to be detected are preferably permanently fixed to the openings of the chamber and preferably into the channels which connect these openings. The permanent connection can be effected preferably by a heat-resistant adhesive such as Loctite^{®} 272™, Loctite^{®} 5398^{™}, Loctite^{®} 5399^{™} which are manufactured by Henkel AG & Co. KGaA (Düsseldorf, Germany). Alternatively, the electrodes and capillaries can also be directly molten into the chamber, which most effectively avoids the risk of leakages. It is, of course, also possible that e.g. the electrodes are molten into the chamber and the capillaries are fixed to the chamber by a heat-resistant adhesive or vice versa or that one of the capillaries or two of the capillaries or one of the electrodes or two of the electrodes are fixed to the chamber by a heat-resistant adhesive and the other elements are molten into the chamber. However, preferably either all the capillaries and electrodes are molten into the chamber or all the electrodes and capillaries are fixed by a heat-resistant adhesive.

The channels in the chamber have a size which is adapted to the size of the electrodes and the capillaries and for usual electrodes the channels have a diameter of e.g. 1.5 mm for the ionization electrodes and e.g. 0.8 mm for the capillaries and the collecting electrode. Of course, different diameters for the channels can be used, depending on the actual size of the chamber, the size of the electrodes used and the size of the capillaries.

As a suitable material for the monolithic block any electrically insulating material with a sufficiently high heat resistance can be employed. It is important that the employed material remains electrically insulating at operating temperatures of the HID. Suitable materials for the monolithic block are e.g. ceramics, quartz glass or industrial-grade sapphire, whereby quartz glass and industrial grade sapphire are particularly preferred for this purpose. Most preferred is quartz glass.

If the material of the monolithic block is quartz glass, the electric arc between the spark electrodes can be visually seen. The color of the electric arc indicates if ambient air is present in the chamber 1 of the HID.

The channels can be worked into the monolithic block by any known method. Usually, the channels are drilled into the monolithic block, and it is particularly preferred that the channels are drilled by the ultrasonic machining technique, such as by using a USDC (Ultrasonic/Sonic Driller/Corer). With respect to this technique and corresponding machinery it is particularly referred to US 6,863,136, US 6,968,910 and US 7,156,189.

In a preferred embodiment of the present invention, the openings for parts (a) to (e) have a conical section 7 and a cylindrical section 8. The presence of a conical section provides an additional advantage, because such conical section can be filled with a temperature-resistant adhesive. This leads to an increased mechanical stability of the HID and additionally prevents ambient air from entering the chamber 1. Furthermore, the presence of such conical sections facilitates the introduction of the capillaries and the electrodes during the assembly of the HID.

The electrodes 2 and 6, the gas inlets 3 and 4 and the gas outlet 5 are usually irremovably attached to the chamber 1. Thus, their alignment does not require any adjustment even after operation at high temperatures.

The material of the anode, of the cathode and of the collecting electrode 6 (hereinafter designated as the electrode material) is preferably a metal or an alloy with a sufficiently high melting point. Preferably, the electrode material has a melting point of at least 1500°C, preferably of at least 2000°C, particularly preferred of at least 2500°C. Preferably, the electrode material is selected from the group consisting of stainless steel, molybdenum and tungsten. In a particularly preferred embodiment of the invention, the electrode material is selected from the group consisting of molybdenum and tungsten. Preferably, the electrode material is tungsten. High melting point of the electrode material reduces the metal transport between the electrodes and therefore enables a significant increase of their lifetime. Such electrodes are known in the prior art and can be obtained e.g. from the company R&W Maschinenbau GmbH (Remagen, Germany).

The anode and the cathode are aligned in such a way that the electric arc is always initiated in the same location and with the same shape when applying a DC voltage between said ionization electrodes. In a preferred embodiment of the invention, the cathode has a flat polished tip and the anode has a sharp tip, having an angle between 20° and 40°. These two electrodes are separated by a gap ranging between 0.05 mm and 0.50 mm. Preferably, the cathode and the anode are separated by a gap ranging between 0.1 mm and 0.30 mm at the operating temperature, for example by a gap of 0.20 mm.

This feature ensures that the electric arc is always located at the tip of the sharp electrode, spraying on the flat zone of the cathode, which permits the induction of the constant plasma shape. The resulting background noise is therefore significantly reduced. Furthermore, both electrodes are finely polished, which avoids electric arc initiations on a surface defect, ensuring always the correct position of the electric arc.

The HID of the present invention can be operated both in a pulse-sparked discharge mode and upon applying a DC voltage (a constant voltage). Preferably, the HID of the present invention is operated upon applying a DC voltage.

The electrodes 2 and 6 as well as both inlets 3 and 4 and the outlet 5 of the HID are precisely fitted into the openings of the chamber 1.

The inlet for helium gas 3, the inlet for the components to be detected 4 and the gas outlet 5 are formed by capillaries, and the capillaries are preferably made from the same material as the electrodes. Thus, the electrodes are also preferably made e.g. from stainless steel, molybdenum or tungsten, most preferably from tungsten. It is also possible e.g. to use electrodes which are made from tungsten and capillaries which are made from another material, such as stainless steel, but preferably all components, the electrodes and the capillaries, are made from tungsten.

By forming the chamber of the helium ionization detector of the present invention from a monolithic block, it becomes possible to easily place the helium ionization detector in an encapsulating shell 9. Preferably, the encapsulating shell 9 consists of an upper part and a lower part. This allows an easier handling of the (very small) HID and also has additional advantages, as discussed below.

In one embodiment of the present invention, the HID is as shown in Figure 1a. The upper and the lower part of the encapsulating shell 9 can be connected (e.g. by screws) and then forms a hollow space which is shaped to receive and enclose the HID. The encapsulating shell 9 has openings for the electrodes and the capillaries that are connected to the HID. The encapsulating shell 9 is preferably connected to a heating device (not shown), e.g. by a screw connection. Due to an effective heat exchange between the encapsulating shell 9 and the chamber 1 the HID can be efficiently heated from the temperature of the surroundings to its operational temperature and kept at the operational temperature during the measurements. Preferably, the HID of the present invention can be heated to the operational temperature within less than 10 minutes, particularly preferred within less than 5 minutes.

Preferably, the HID is operated at an operational temperature ranging between 30°C and 400°C, particularly preferred between 40°C and 200°C. The preferred operational temperature depends on the properties of compounds to be detected. The operational temperature preferably ranges between 40°C and 120°C when gaseous compounds are analyzed e.g. compounds which are gaseous at atmospheric pressure and ambient temperature. For the analysis of gas oils and hydrocarbons the operational temperature of the HID ranges between 40°C and 400°C, preferably 40°C and 350°C and is usually adjusted by a temperature program.

The material of the encapsulating shell 9 is preferably a metal or a metal alloy with a high thermal conductivity. Preferably, the material of the encapsulating shell 9 is selected from the group consisting of aluminum and copper. Preferably, the material of the encapsulating shell 9 is aluminum. In a preferred embodiment, the encapsulating shell 9 comprises one or more windows or openings to allow a visual inspection of the HID during operation, e.g. the electric arc formed between the electrodes 2.

The present invention further relates to a gas chromatographic apparatus comprising the HID of the present invention. Because the HID of the present invention can be built in a highly compact manner, does not require any adjustments and is highly reliable, the gas chromatographic apparatus comprising the HID of the present invention can also be built in a highly compact manner. Such a gas chromatographic apparatus can be used for automatic measuring devices and is highly suitable for a wide range of applications, for instance for the analysis of ambient air, natural gas and oil analysis as well as in aerospace measuring devices.

Gas chromatography apparatuses are well-known in the art and commercially available from many producers, and therefore, a detailed description of such a gas chromatography device is not considered necessary here. The new helium ion detector of the present invention can in principle be used with any existing or future gas chromatography apparatus and will provide a significantly better resolution and signal-to-noise ratio than conventional helium ion detectors. In particular, by using the HID of the present invention, the resolution of the GC can be increased by a factor of up to about 10 compared to conventional HIDs.

Connecting a helium ion detector with a gas chromatograph is well within the general knowledge of a skilled person and needs no explanation in detail. Just by way of example, a gas chromatography apparatus is disclosed e.g. in US 2010/0064770.

In addition, the present invention relates to a method for analyzing a gaseous or fluid sample in a carrier gas with the helium ionization detector of the present invention, whereby the method comprises
(i) flowing helium gas through inlet 3 to the pair of ionization electrodes 2,
(ii) forming a plasma from the helium gas by means of an electric arc between the pair of ionization electrodes 2,
(iii) introducing a gaseous sample into the chamber 1 through the inlet 4,
(iv) ionizing the gaseous sample with photons produced by the plasma of the helium gas, and
(v) collecting the ionized gaseous sample on the collecting electrode 6.

In summary, the design of the HID of the present invention offers a significantly increased resolution and accuracy. The HID of the present invention provides highly precise results when detecting and quantifying various compounds eluting from a gas chromatography column. Furthermore, the problems arising from the misalignment of the electrodes or inlets are avoided and the background noise is significantly reduced.

The invention will now be explained by way of example on the basis of Figures 1 to 6.
**Figure 1a** shows a schematic three-dimensional picture of a preferred HID of the present invention, enclosed within an encapsulating shell and **Figure 1b** shows the schematic representation of the HID of the present invention.
**Figure 2** shows a schematic picture of a preferred example of a HID chamber used in the present invention.
**Figure 3a** shows a chamber for a HID sensor according to the present invention in its actual dimensions and **Figure 3b** shows an enlarged three-dimensional view of this chamber.
**Figure 4** shows a gas chromatogram of a gas mixture containing 1% CH₄ and 1% CO, detected by a HID of the present invention.
**Figure 5** shows a typical gas chromatogram of a mineral oil sample, detected by the HID of the present invention.
**Figure 6** shows a gas chromatogram of a gas mixture containing 0.1 % argon, detected by the HID of the present invention.

Figures 1 a and 1b show a preferred HID of the present invention. Figure 1 a is a three-dimensional representation of the HID enclosed within an encapsulating shell, Figure 1b is a schematic representation of the HID viewed from above. The HID is enclosed by the encapsulating shell, and the two parts of the encapsulating shell are screwed together to fixate the HID within. In operation, the inlet for the helium gas 3, which is a capillary, is connected to a helium container which provides the required helium gas (not shown). The helium gas enters through the capillary 3 into the measuring chamber. The capillary 3, as well as all other capillaries and all electrodes, are fixed into the monolithic block of chamber 1 with a temperature-resistant adhesive or alternatively they are molten into the chamber 1.

The electrodes 2, which are tungsten electrodes, are connected to a suitable device (not shown) which provides sufficient voltage so that the helium gas that enters through inlet 3 is ionized.

The inlet for the compounds to be detected is connected to the column of the gas chromatography apparatus (not shown). The mixture of the components to be detected is separated by the column of the gas chromatograph (not shown) and then passed through inlet 4 (again a capillary) into the chamber 1. When the compounds separated by the column enter the chamber through inlet 4, they are ionized by photons from the ionized helium which falls back into a stable state. The ionized compounds to be detected are then trapped at the collector electrode 6 and produce a current which is proportional to their relative concentration. The current is measured by a measuring device (not shown) that is connected to collecting electrode 6, and the current is either recorded or shown or otherwise analyzed. The helium gas and the analyzed gas sample then leave the measuring chamber via the capillary which forms outlet 5. Outlet 5 is preferably curled (not shown) in order to prevent components from the surrounding atmosphere from entering the measuring chamber.

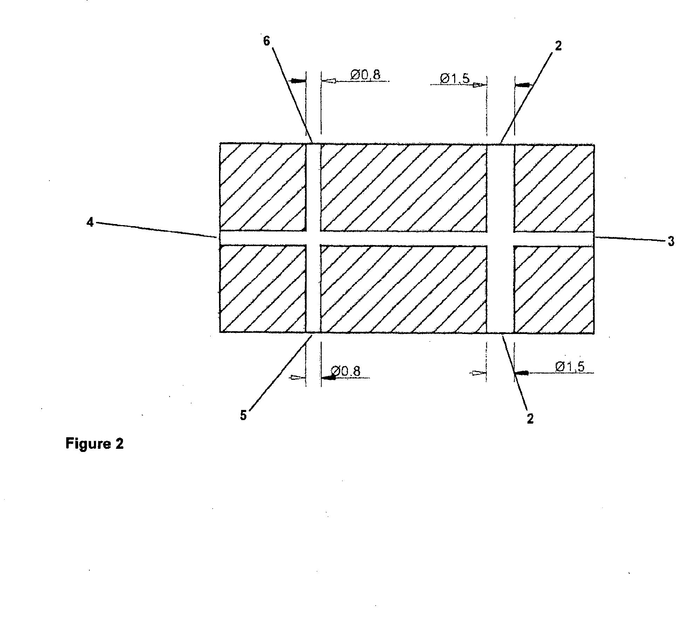

Figure 2 shows a schematic drawing of a preferred chamber for preparing the HID of the present invention. The chamber contains openings 2, 3, 4, 5 and 6 for fixing the electrodes and capillaries as explained above, and those openings are preferably connected by a channel system as shown in Figure 2. Figure 2 only shows the preferred diameters of the individual chambers.

Figure 3a shows a preferred measuring chamber for producing an HID of the present invention, and the measuring chamber is shown in its exact size of 20 mm x 10 mm x 3 mm. Figure 3a shows all the preferred diameters of the channels into which the electrodes and capillaries of the HID of the present invention are fixed.

Figure 3b shows an elevated 3D image of a measuring chamber according to the present invention as seen from the outside.

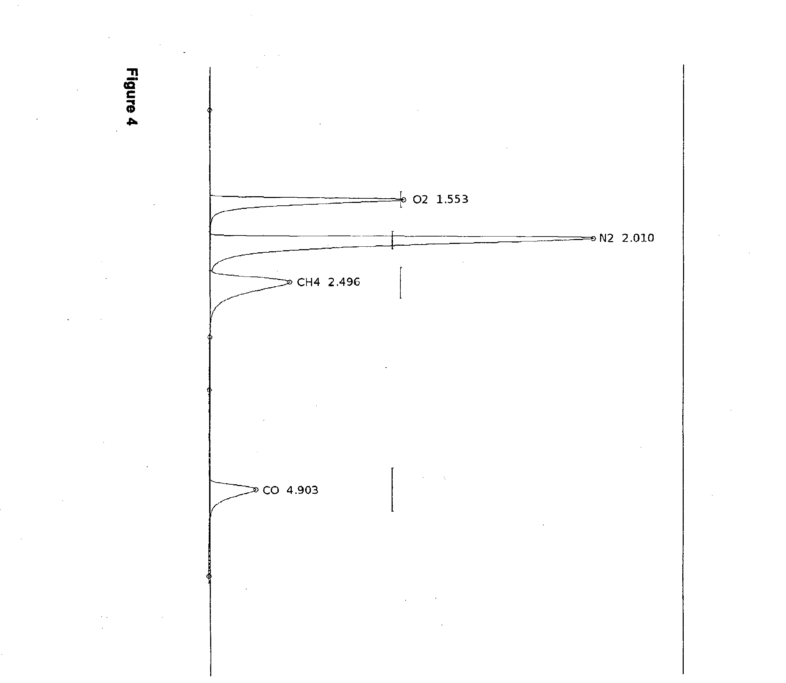

Figures 4, 5 and 6 show sample chromatograms that have been prepared with the preferred HID of the present invention as shown in Figure 1a and using a commercial gas chromatographic apparatus.

In the following example the preparation and use of a preferred HID according to the invention which was used to prepare the chromatogram of Figures 4, 5, and 6 is explained.

### Examples

A monolithic block made from quartz glass and having the outer dimension 20 mm x 10 mm x 3 mm is obtained from Hellma GmbH & Co. KG. There are several companies that offer the technique for drilling small holes in glass plates. The channels with diameters of 1.5 mm and 0.8 mm as shown in Figures 2, 3a and 3b were drilled into the glass plate by the company Hellma GmbH & Co. KG (Müllheim, Germany). Using a high-temperature adhesive (Loctite^{®} 5398™), an anode and a cathode were fitted into the channels with a 1.5 mm diameter. A collector electrode was fitted into one of the channels having a diameter of 0.8 mm as shown in Figure 1b, and capillaries made from stainless steel obtained from VICI Valco, Switzerland were fitted into the remaining channels of the measuring chamber. All elements of the electrode were fitted using the same high-temperature adhesive.

The distance between the anode and the electrode for producing the plasma was set to be 0.2 mm. The general assembly was as shown in Figure 1b with the dimensions as shown in Figure 3a. The so-obtained HID was mounted in an encapsulating shell made of aluminum. The encapsulating shell was tightly fitted around the HID to allow an efficient heat transfer. However, some space was left inside of the encapsulating shell because of the different thermal expansion of the HID and the encapsulating shell. The encapsulating shell was screwed together and screwed to a conventional heating device and a temperature control sensor for achieving the desired operating temperature.

The so-obtained assembly is schematically shown in Figure 1a (without heating device and temperature control sensor).

The so-prepared HID enclosed within an encapsulating shell and connected to a heating device was connected to a gas chromatograph SRI Instruments Inc. 8610C. With this gas chromatograph several measurements were made as follows.

### Example 1

A gas mixture containing 1% O₂, 1% N₂, 1% CH₄ and 1% CO in helium was prepared and introduced into the gas chromatograph. The chromatograph was equipped with a 2 m packed GC column Molecular Sieve 13X, purchased from Restek GmbH (Bad Homburg, Germany). The oven temperature was set to 40°C. The injection volume of the analyte was 1 µl, whereby split ratio of 1 : 20 was used. Flow rate of the GC column was 8 mL/min and flow rate of the make up gas (helium) was adjusted to 12 mL/min. The obtained chromatogram is shown in Figure 4

### Example 2

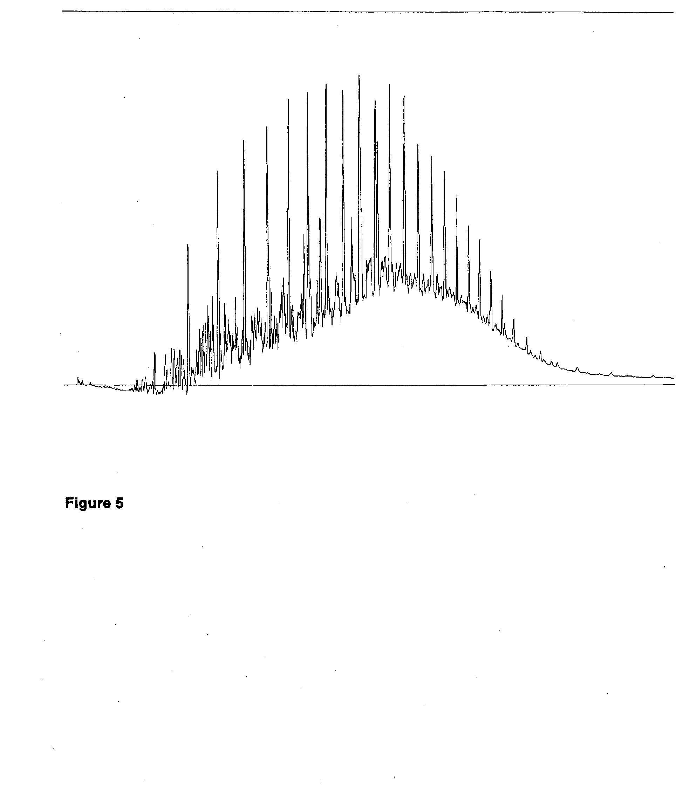

A standard reference gas oil sample C4-C40 was used for analysis. The separation was carried out on a 30 m packed GC column MXT^{®}-1, purchased from Restek GmbH. The injection temperature was 300°C and the oven temperature was programmed to increase from 40°C to 350°C. The injection volume of the analyte was 2 µl, whereby split ratio of 1 : 50 was used. Flow rate of the GC column was 2 mL/min and flow rate of the make up gas (helium) was adjusted to 12 mL/min. The obtained chromatogram is represented in Figure 5.

### Example 3

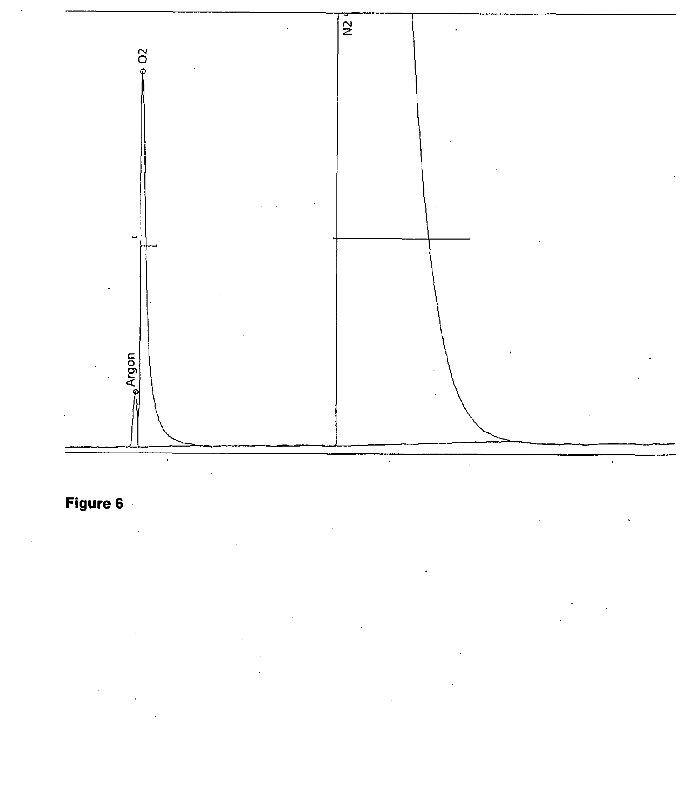

A gas mixture containing 0.1% argon and a small amount of O₂ in N₂ was prepared. The separation was carried out on a 2 m packed GC column Molecular Sieve 13X, purchased from Restek GmbH. The oven temperature was set to 40°C. The injection volume of the analyte was 10 µl. Flow rate of the GC column was 8 mL/min and flow rate of the make up gas (helium) was adjusted to 12 mL/min. The obtained chromatogram is shown in Figure 6.

## Claims

1. A helium ionization detector comprising a chamber (1) with
(a) a pair of ionization electrodes (2)
(b) an inlet for helium gas (3)
(c) an inlet for the components to be detected (4)
(d) a gas outlet (5)
(e) a collecting electrode (6)
**characterized in that** the chamber (1) is a monolithic block containing openings for parts (a), (b), (c), (d) and (e).

2. The helium ionization detector according to claim 1, wherein the openings for parts (a) to (e) are fluidly connected by channels in the chamber (1).

3. The helium ionization detector according to claim 1 or 2, wherein the openings for parts (a) to (e) have a conical section (7) and a cylindrical section (8).

4. The helium ionization detector according to any of claims 1 to 3, wherein at least one of parts (a) to (e) is attached to the chamber (1) with a temperature-resistant adhesive.

5. The helium ionization detector according to any of claims 1 to 4, wherein at least one of the electrodes (a) or (e) are molten into the chamber (1).

6. The helium ionization detector according to any of claims 1 to 5, wherein parts (a) to (e) are either attached to the chamber (1) with a temperature-resistant adhesive or molten into the chamber (1).

7. The helium ionization detector according to any one of claims 4 to 6, wherein the electrodes (a) and (e) are molten into the chamber and the inlets and outlets (b), (c) and (d) are attached to the chamber (1) with a temperature-resistant adhesive.

8. The helium ionization detector according to any of claims 1 to 7, wherein the chamber (1) is enclosed within an encapsulating shell (9).

9. The helium ionization detector according to claim 8, wherein the encapsulating shell (9) is connected to heating means for heating the helium ionization detector to its operational temperature.

10. The helium ionization detector according to any of claims 1 to 9, whereby the chamber (1) is made of quartz glass or industrial-grade sapphire.

11. A gas chromatographic apparatus comprising a helium ionization detector according to any of claims 1 to 10.

12. Method of analyzing an eluted sample in a carrier gas with a helium ionization detector according to any of claims 1 to 10, the method comprising
(i) flowing helium gas through inlet (3) to the pair of ionization electrodes (2),
(ii) forming a plasma from the helium gas by means of an electric arc between the pair of ionization electrodes (2),
(iii) introducing a gaseous sample into the chamber (1) through the inlet (4),
(iv) ionizing the gaseous sample with photons produced by the plasma of the helium gas,
(v) collecting the ionized gaseous sample on the collecting electrode (6).

## Patentansprüche

1. Heliumionisationsdetektor, umfassend eine Kammer (1) mit
(a) einem Paar von Ionisationselektroden (2)
(b) einem Einlass für Heliumgas (3)
(c) einem Einlass für die zu detektierenden Komponenten (4)
(d) einem Gasauslass (5)
(e) einer Sammelelektrode (6),
**dadurch gekennzeichnet, dass** die Kammer (1) ein monolithischer Block ist, der Öffnungen für die Teile (a), (b), (c), (d) und (e) enthält.

2. Heliumionisationsdetektor nach Anspruch 1, wobei die Öffnungen für die Teile (a) bis (e) durch Kanäle in der Kammer (1) in Fluidverbindung stehen.

3. Heliumionisationsdetektor nach Anspruch 1 oder 2, wobei die Öffnungen für die Teile (a) bis (e) einen konischen Abschnitt (7) und einen zylindrischen Abschnitt (8) aufweisen.

4. Heliumionisationsdetektor nach einem der Ansprüche 1 bis 3, wobei zumindest eines der Teile (a) bis (e) an der Kammer (1) mit einem temperaturbeständigen Haftmittel befestigt ist.

5. Heliumionisationsdetektor nach einem der Ansprüche 1 bis 4, wobei zumindest eine der Elektroden (a) oder (e) mit der Kammer (1) verschmolzen ist.

6. Heliumionisationsdetektor nach einem der Ansprüche 1 bis 5, wobei die Teile (a) bis (e) entweder an der Kammer (1) mit einem temperaturbeständigen Haftmittel befestigt oder mit der Kammer (1) verschmolzen sind.

7. Heliumionisationsdetektor nach einem der Ansprüche 4 bis 6, wobei die Elektroden (a) und (e) mit der Kammer verschmolzen und die Einlässe und Auslässe (b), (c) und (d) an der Kammer (1) mit einem temperaturbeständigen Haftmittel befestigt sind.

8. Heliumionisationsdetektor nach einem der Ansprüche 1 bis 7, wobei die Kammer (1) in einer Einkapselungshülle (9) eingeschlossen ist.

9. Heliumionisationsdetektor nach Anspruch 8, wobei die Einkapselungshülle (9) mit Heizmitteln zum Erhitzen des Heliumionisationsdetektors auf seine Betriebstemperatur verbunden ist.

10. Heliumionisationsdetektor nach einem der Ansprüche 1 bis 9, wobei die Kammer (1) aus Quarzglas oder Saphir in Industriequalität gefertigt ist.

11. Gaschromatographische Vorrichtung, umfassend einen Heliumionisationsdetektor nach einem der Ansprüche 1 bis 10.

12. Verfahren zur Analyse einer eluierten Probe in einem Trägergas mit einem Heliumionisationsdetektor nach einem der Ansprüche 1 bis 10, wobei das Verfahren
(i) das Strömenlassen von Heliumgas durch den Einlass (3) zu dem Paar von Ionisations-elektroden (2),
(ii) das Bilden eines Plasmas aus dem Heliumgas mittels eines elektrischen Lichtbogens zwischen dem Paar von Ionisationselektroden (2),
(iii) das Einbringen einer gasförmigen Probe in die Kammer (1) durch den Einlass (4),
(iv) das Ionisieren der gasförmigen Probe mit Photonen, die von dem Plasma des Heliumgases erzeugt werden,
(v) das Sammeln der ionisierten gasförmigen Probe an der Sammelelektrode (6) umfasst.

## Revendications

1. Détecteur d'ionisation de l'hélium comprenant une chambre (1) avec
(a) une paire d'électrodes d'ionisation (2)
(b) une entrée pour le gaz d'hélium (3)
(c) une entrée pour les composants à détecter (4)
(d) une sortie de gaz (5)
(e) une électrode collectrice (6)
**caractérisée en ce que** la chambre (1) est un bloc monolithique contenant des ouvertures pour les parties (a), (b), (c), (d) et (e).

2. Détecteur d'ionisation de l'hélium selon la revendication 1, dans lequel les ouvertures pour les parties (a) à (e) sont reliées de manière fluidique par des canaux dans la chambre (1).

3. Détecteur d'ionisation de l'hélium selon la revendication 1 ou 2, dans lequel les ouvertures pour les parties (a) à (e) ayant une section conique (7) et une partie cylindrique (8).

4. Détecteur d'ionisation de l'hélium selon l'une quelconque des revendications 1 à 3, dans lequel au moins une des parties (a) à (e) est fixée à la chambre (1) avec un adhésif résistant à la température.

5. Détecteur d'ionisation de l'hélium selon l'une quelconque des revendications 1 à 4, dans lequel au moins l'une des électrodes (a) ou (e) sont en fusion dans la chambre (1).

6. Détecteur d'ionisation de l'hélium selon l'une quelconque des revendications 1 à 5, dans lequel les parties (a) à (e) sont soit fixées à la chambre (1) avec un adhésif résistant à la température ou fondu dans la chambre (1).

7. Détecteur d'ionisation de l'hélium selon l'une quelconque des revendications 4 à 6, dans lequel les électrodes (a) à (e) sont fondus dans une chambre et les entrées et sorties (b), (c) et (d) sont fixés à la chambre (1) avec un adhésif résistant à la température.

8. Détecteur d'ionisation de l'hélium selon l'une quelconque des revendications 1 à 7, dans lequel la chambre (1) est entourée d'une enveloppe d'encapsulation (9).

9. Détecteur d'ionisation de l'hélium selon la revendication 8, dans lequel l'enveloppe d'encapsulation (9) est connectée à des moyens de chauffage pour chauffer le détecteur à ionisation de l'hélium à sa température de fonctionnement.

10. Détecteur d'ionisation de l'hélium selon l'une quelconque des revendications 1 à 9, dans lequel la chambre (1) est réalisée en verre de quartz ou en saphir de qualité industrielle.

11. Dispositif de chromatographie en phase gazeuse comprenant un détecteur d'ionisation de l'hélium selon l'une quelconque des revendications 1 à 10.

12. Procédé d'analyse d'un échantillon élué dans un gaz porteur avec un détecteur à ionisation de l'hélium selon l'une quelconque des revendications 1 à 10, le procédé comprenant :
(i) l'écoulement de l'hélium gazeux à travers l'entrée (3) à la paire d'électrodes d'ionisation (2)
(ii) la formation d'un plasma à partir du gaz d'hélium à l'aide d'un arc électrique entre la paire d'électrodes d'ionisation (2),
(iii) l'introduction d'un échantillon gazeux dans la chambre (1) à travers l'orifice d'entrée (4),
(iv) l'ionisation de l'échantillon gazeux avec des photons produits par le plasma du gaz d'hélium,
(v) la réception de l'échantillon gazeux ionisé à l'électrode collectrice (6).
